# EUROPEAN PATENT SPECIFICATION

(11) **EP 3 483 342 B1**
(45) Date of publication and mention of the grant of the patent: **07.06.2023**
(21) Application number: 18205628.3
(22) Date of filing: 12.11.2018
(51) Int. Cl.: E02B 17/02, E02B 17/00, B66C 23/52, B63B 35/44, F03D 13/25, B66C 1/10, B66C 13/08, B66C 13/46

(54) **DEVICE AND METHOD FOR ARRANGING A SECONDARY CONSTRUCTION ON AN OFFSHORE PRIMARY CONSTRUCTION**
VORRICHTUNG UND VERFAHREN ZUR ANORDNUNG EINER SEKUNDÄRKONSTRUKTION AUF EINER OFFSHORE-PRIMÄRKONSTRUKTION
DISPOSITIF ET PROCÉDÉ D'AGENCEMENT D'UNE CONSTRUCTION SECONDAIRE SUR UNE CONSTRUCTION PRIMAIRE OFFSHORE

(30) Priority: 10.11.2017 BE 201705821
(43) Date of publication of application: 15.05.2019
(73) Proprietor: DEME Offshore BE N.V., 2070 Zwijndrecht (BE)
(72) Inventor: BAERT, Benjamin Ward, 8570 Vichte (BE); RABAUT, Dieter Wim Jan, 9000 Gent (BE)
(74) Representative: Brouwer, Hendrik Rogier

(56) References cited:
- DE-A1- 10 321 850
- NL-A- 2 018 377
- NL-B- 2 018 377
- US-A- 4 832 530
- US-A- 5 188 484
- US-A- 5 437 517
- US-A1- 2010 313 417

## Description

### TECHNICAL FIELD OF THE INVENTION

The invention relates to an auxiliary device for arranging and attaching in a desired position of a secondary construction on an already present offshore primary construction. The invention likewise relates to a method for accurately arranging and attaching in a desired position of the secondary construction on the primary construction using the device. The invention relates particularly to an auxiliary device and method for arranging and attaching in a desired position of an anode cage on a monopile foundation of an offshore wind turbine.

The invention will be elucidated herein below with reference to an offshore wind turbine, for which the invention is particularly suitable.

### BACKGROUND OF THE INVENTION

An offshore wind turbine is generally placed on a support structure anchored to a seabed. For offshore wind turbines which are placed in relatively shallow water the support structure can comprise a monopile arranged in the seabed and extending above the water surface. A lattice structure or jacket can, if desired, be applied for deeper water. In order to connect the wind turbine mast to a monopile use is in the prior art made of a transition piece. The transition piece is connected on a lower side thereof to the monopile and on an upper side thereof to the wind turbine mast. The transition piece can, if desired, be provided with secondary constructions such as a work platform, a jetty and other useful applications.

In order to make a monopile corrosion-resistant it is generally provided with a so-called anode cage, constructed from anode tubes, which is arranged around the monopile under water. The monopile is for this purpose generally provided with suspension points which can only have limited dimensions. Suspension points with oversized dimensions are not desirable because they can affect the fatigue resistance of the monopile and form an obstacle during installation of the monopile. The anode cage thus preferably has to be arranged around the monopile with little clearance, and then electrically connected to the monopile.

In a known method use is made of divers or of remotely operated vehicles (ROVs) which guide an anode cage suspended from a hoisting means into a desired position under water and then connect the anode cage mechanically and electrically to the monopile. If desired, use can be made here of auxiliary means.

DE 10321850 A1 discloses an auxiliary device for mounting a wind turbine mast to a monopile foundation. The auxiliary device comprises two hingedly coupled cylinders whereby, in use, a first cylinder is arranged around the monopile foundation and a second cylinder around the wind turbine mast, whereby both are temporarily coupled.

US 2010/0313417 discloses an auxiliary device for temporarily holding wind turbine blades and attaching them to a rotor. The auxiliary device comprises a ring with a track. An opening in the ring allows a wind turbine blade to slide into the track. A blade can be lifted for coupling to the rotor, for example by a hydraulic cylinder.

US 5,188,484 discloses a jack-up platform, the legs of which can be secured in an elevated position from the working deck with a locking device.

NL 2018377 A discloses a submersible framework on which an entire wind turbine tower can be mounted in a tiltable fashion about a horizontal axis. The framework is used to transport the wind turbine tower over sea and to sink it on site. The wind turbine tower is then brought in a vertical position by rotation of a tiltable part of the framework.

US 4,832,530 discloses an apparatus for laying pipe sections underwater. A beam is releasably attached to a pipe section and lowered to attach it to a previously laid pipe section. A positioning fork aligns the pipe ends.

US 5,437,517 finally discloses a method for repairing an underwater pipeline using a working module.

With the known method the risk of damage to the secondary construction or the monopile is considerable, especially when work has to be carried out in relatively severe weather. The known method is moreover time-consuming, among other reasons because the divers or the ROV have to perform a number of operations in succession, such as guiding the anode cage, mechanically and then electrically attaching the anode cage to the monopile, and inspecting the operation of the anode cage. For each operation separate tools have to be retrieved and carried under water into the vicinity of the anode cage.

### SUMMARY OF THE INVENTION

The invention has for its object, among others, to provide a device and corresponding method which at least partially obviates the above stated prior art drawbacks.

According to the invention, this object is achieved by providing an auxiliary device according to claim 1. The auxiliary device for arranging and attaching in a desired position of a secondary construction on an already present offshore primary construction comprises a support body which can be suspended from a hoisting means using coupling means and can be carried into the vicinity of the primary construction, wherein the support body comprises remotely controlled tools, wherein a tool is configured to engage the secondary construction and then release it in the desired position, and the auxiliary device is equipped with tools for realizing an electrical and mechanical connection between the secondary and the primary construction.

The auxiliary device is embodied such that, after the electrical and mechanical connection between the secondary and the primary construction has been realized, it can be removed or, in other words, can be moved out of the vicinity of the primary construction, using the hoisting means and the coupling means. This means that the auxiliary device is not configured to form part of the electrical and/or mechanical connection between the first and second construction. The auxiliary device therefore differs from the first and/or second construction.

With the tools it is possible to perform operations remotely. It is thus for instance possible to perform mechanical operations, such as tightening bolts using a torque wrench in order to for instance secure an anode cage on a primary construction in the form of a monopile. It is also possible to perform electrical operations, such as for instance realizing an earth connection using a nail gun. According to an embodiment of the invention, the tools for the two operations (torque wrench and nail gun) are placed on the support body.

The tools of the invented device are configured inter alia to engage the secondary construction and then release it. In addition, the auxiliary device is equipped with tools for achieving a desired position and/or realizing an electrical and mechanical connection between the primary and the secondary construction.

With the invented device a secondary construction can be attached to an offshore primary construction in accurate and safe manner, wherein the secondary construction is preferably situated under water.

Provided for this purpose according to the invention is a method which includes the steps of:
- providing an auxiliary device according to the invention;
- suspending the support body from a hoisting means using the coupling means;
- carrying the support body into the vicinity of the primary construction;
- engaging the secondary construction with the remotely controlled tools and bringing it into the desired position;
- then releasing it in the desired position; and
- electrically and mechanically connecting the secondary construction to the primary construction.

After the electrical and/or mechanical connection has been realized the auxiliary device is removed and moved out of the vicinity of the first construction with the hoisting means. Because the first and second construction are mutually connected, the auxiliary device is also moved out of the vicinity of the second construction. Moving the auxiliary device out of the vicinity is understood to mean, among other things, that the auxiliary device is not configured to be permanently connected to the first and/or second construction.

The desired position is preferably located under water or at other locations which are difficult to reach.

According to the invention, the support body of the auxiliary device is in use suspended from a hoisting means. The support body is preferably provided for this purpose with lifting eyes. The suspending of the support body from the hoisting means can take place in different ways. In an embodiment it is thus possible to attach the support body directly to a hook of the hoisting means. In another embodiment the support body is attached to a hook of the hoisting means by applying hoisting cables and, if desired, a spreader beam.

In yet another embodiment the support body comprises a first part which engages or supports on a support position of the primary construction during use, and a second part connected displaceably to the first part and comprising the tools. The second part can be displaced relative to the first part in any known manner, for instance by means of cables which are connected to the second part and to winches attached to the first part, or vice versa. In the case that the primary construction comprises a monopile, in an embodiment the support position is an upper surface of the monopile.

The invention relates to an auxiliary device wherein the support body comprises a peripheral body which can be placed around the primary construction.

According to the invention, the primary construction comprises a foundation pile or transition piece of an offshore wind turbine.

According to the invention the secondary construction comprises an anode cage for a foundation pile or transition piece of an offshore wind turbine, and the primary and the secondary construction are electrically and mechanically connected.

According to the invention, the support body of the auxiliary device is provided with remotely controlled tools. A tool of the remotely controlled tools is configured to engage the secondary construction and then release it in the desired position. Means suitable for this purpose comprise, but are not limited to, chains (shackles), cables (slings), mechanical means such as grippers and, if desired hydraulic, pin-hole connections, and so on. Combinations of such means are also possible.

The auxiliary device is further characterized in that a positioning tool of the remotely controlled tools is configured to position the secondary construction relative to the primary construction. Suitable positioning tools comprise, but are not limited to, a propelling means, a number of wheels which make contact with a surface of the primary construction, or a turntable, or a combination of these positioning tools.

The positioning tool is configured to guide the secondary construction along the primary construction.

The auxiliary device is further provided with a tool of the remotely controlled tools which is configured to connect the secondary construction to the primary construction. Any manner of connecting is possible in principle. In an embodiment the connecting tool is thus for instance configured to form a welded connection, a bolt connection, a screw connection, a grouted connection, a clamping connection, a seam-folded connection, a pin-hole connection or a friction welded connection, or a combination of said connections.

The advantages of the invention become more particularly manifest in an embodiment of the auxiliary device wherein it comprises monitoring equipment. Such monitoring equipment is per se known and can for instance comprise a camera, a gyrocompass, a depth sensor, a GPS or an electrical sensor, or a combination of said equipment.

The auxiliary device according to the invention is preferably applied under water, and an embodiment wherein the tools and/or the monitoring equipment are accommodated in a substantially watertight housing is then advantageous.

According to the invention, the tools are remotely controlled, and an embodiment of the auxiliary device comprises electrical, hydraulic, optical and/or acoustic means for the remote control. According to an embodiment of the auxiliary device, it comprises a hydraulic circuit which is remotely controlled and in which at least the tools are received. In an embodiment the auxiliary device can be operated from a position above water, for instance from a jack-up platform or other floating device.

A suitable embodiment of the invention comprises an auxiliary device which further comprises a control, for instance a controller or control panel, for controlling the tools and/or the monitoring equipment. It is thus for instance possible for valves of a hydraulic circuit to be controlled, directly or via a hydraulic pilot circuit, using a hand tool, for instance a control stick. It is also possible to embody the control pneumatically, for instance in order to reduce the risk of explosion.

A suitable embodiment of the invention comprises an auxiliary device which further comprises a computer for controlling the tools and/or the monitoring equipment, wherein signal exchange between computer, tools and/or monitoring equipment takes place via a data cable and/or a wireless connection.

Particularly suitable embodiments comprise auxiliary devices wherein the primary construction is stationary and the secondary construction is placed on or partially over the primary construction, more particularly wherein the primary construction comprises a monopile or jacket, particularly of an offshore wind turbine, and the secondary construction comprises an anode cage construction, a mooring construction and/or a J-tube construction, particularly of an offshore wind turbine.

The auxiliary device and method according to the invention are particularly suitable for placing an anode cage around a monopile foundation of a wind turbine offshore and under water. Other applications are also possible, for instance the arranging of transponders on a primary construction such as a monopile in order to increase visibility for ships and avoid collisions.

Finally, it is stated that the embodiments of the invention described in this patent application can be combined in any possible combination of these embodiments, and that each embodiment can individually form the subject-matter of a divisional patent application.

### BRIEF DESCRIPTION OF THE FIGURES

The invention will now be further elucidated on the basis of the following figures and description of a preferred embodiment, without the invention otherwise being limited thereto. In the figures:
Fig. 1A, 1B and 1C show a schematic side view of three embodiments according to the invention wherein an auxiliary device is applied to arrange a secondary structure around a monopile of an offshore wind turbine;
Fig. 2A and 2B show a schematic perspective view of the embodiments shown in fig. 1B and 1C;
Fig. 3A and 3B show a schematic side view of a number of method steps according to an embodiment of the invention;
Fig. 4 shows a schematic side view of an auxiliary device according to an embodiment of the invention;
Fig. 5A, 5B and 5C show a schematic perspective detail view of an auxiliary means according to an embodiment of the invention;
Fig. 6A and 6B show respectively a schematic perspective top and bottom view of an auxiliary device according to another embodiment of the invention coupled to an anode cage;
Fig. 7A and 7B show a schematic perspective view of an embodiment of the auxiliary device according to the invention in a situation in which it is coupled to an anode cage;
Fig. 8 shows a schematic perspective view of the embodiment shown in fig. 2A, wherein the auxiliary device is in a lower position than the secondary construction;
Fig. 9 shows a schematic perspective view of an embodiment wherein an anode cage can engage on a support structure; and
Fig. 10A and 10B show schematically a possible embodiment of a tool for bringing about an electrical connection between the anode cage and the monopile.

### DESCRIPTION OF EXEMPLARY EMBODIMENTS

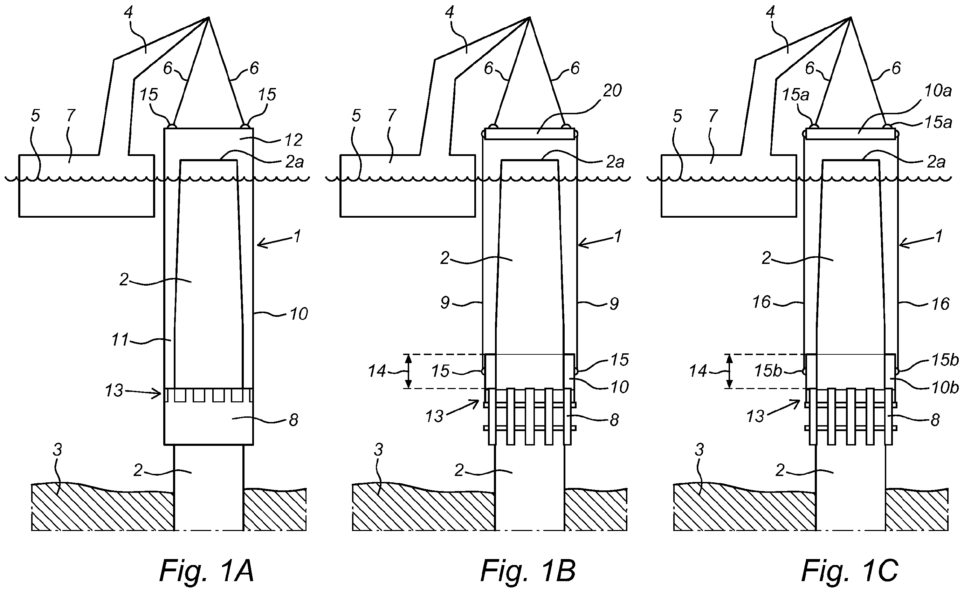

Shown with reference to figures 1A, 1B and 1C are three embodiments of an auxiliary device 1 according to the invention. Auxiliary device 1 is arranged around a monopile 2 anchored in a seabed 3. Monopile 2 can for instance form the foundation for a wind turbine (not shown), a mast of which is placed on monopile 2. Monopile 2 forms a tubular element and can extend from the seabed 3 to a position above the water surface 5, but can also be situated with an upper edge under water. To connect a wind turbine mast to monopile 2 use can be made of a transition piece, although this is not of particular importance in the context of the present invention.

Auxiliary device 1 comprises a support body 10 which is suspended from a hoisting means in the form of crane 4 by a number of hoisting cables 6. Crane 4 is situated on a floating device 7, which can in some cases comprise for instance a jack-up platform.

In the embodiment shown in fig. 1A support body 10 is embodied as a hollow peripheral body with a casing part 11 which can be placed over at least an upper part of monopile 2. Support body 10 further comprises a roof part 12 which rests on an upper surface 2a of the monopile in a lowermost position of support body 10. Support body 10 is further provided with a tool 13 which is configured to engage a secondary construction in the form of an anode cage 8 and then release it in the desired position shown in figures 1A-1C.

In the embodiment shown in fig. 1B support body 10 is embodied as a peripheral ring with relatively limited height 14 which can be placed over monopile 2 and can be lowered under water into a desired position. In this embodiment support body 10 is suspended from a set of slings 9 which are connected vertically downward from a spreader beam 20 to lifting eyes 15 of support body 10.

In the embodiment shown in fig. 1C support body 10 takes a two-part form. A first part 10a comprises a disc-like body which rests on top of the upper surface 2a of the monopile and is connected with a set of slings 16 to a second part 10b in the form of a peripheral ring with relatively limited height 14 which can be placed over monopile 2 and can be lowered under water into a desired position. In this embodiment the first part 10a is suspended from hoisting cables 6 which engage on lifting eyes 15a. The second part 10b is suspended from first part 10a with slings 16 which engage on lifting eyes 15b of second part 10b.

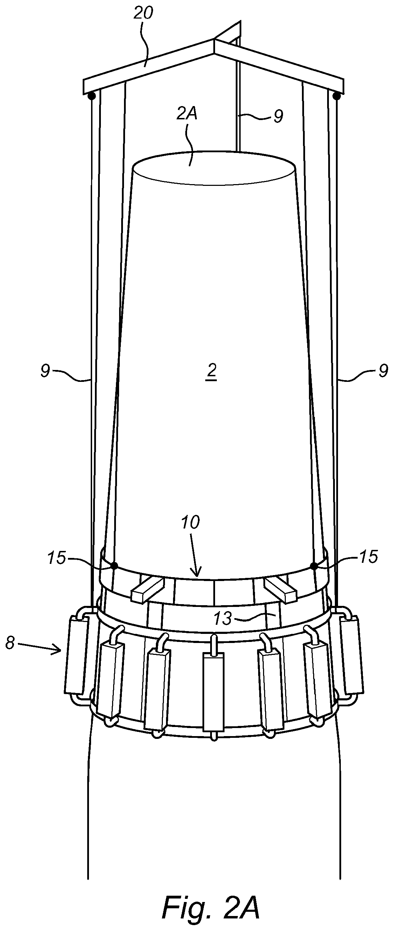

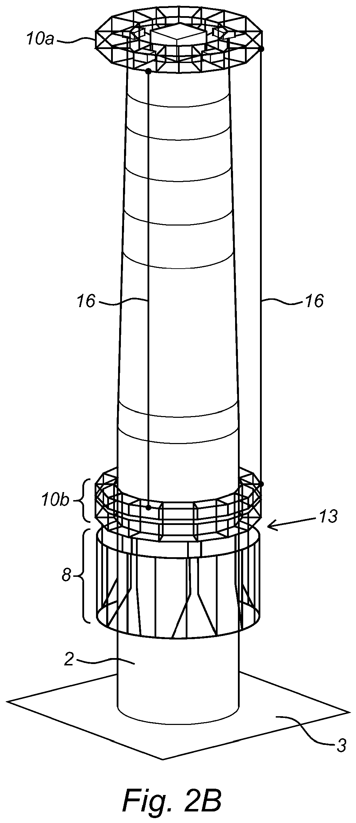

Fig. 2A shows a perspective view of the embodiment shown in fig. 1B, while fig. 2B shows a perspective view of the embodiment shown in fig. 1C. It can be seen here that first part 10a and second part 10b of support body 10 take the form of an annular lattice structure. In this embodiment the tools are located on second part 10b.

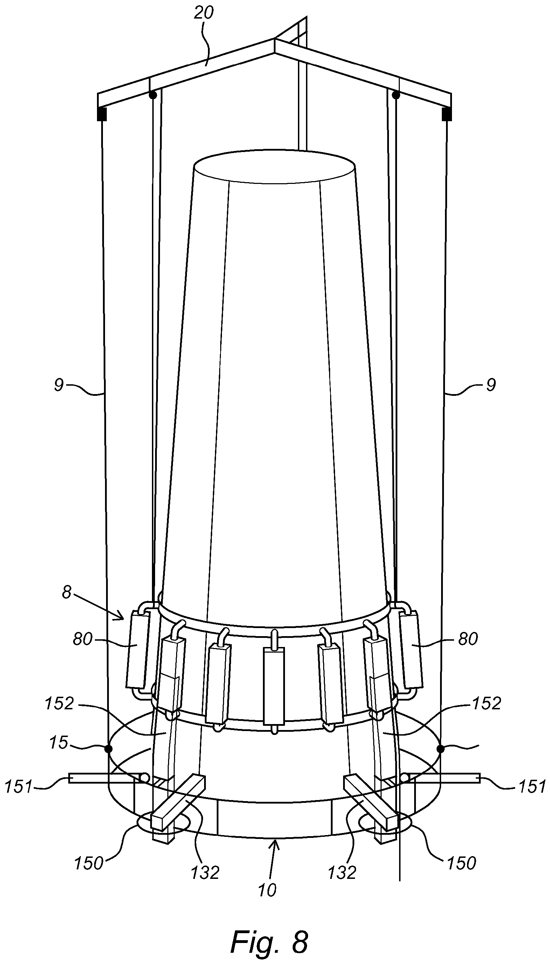

Fig. 8 shows a perspective view of the embodiment shown in fig. 2A. Support body 10 is embodied as a peripheral ring with relatively limited height 14 which can be placed over monopile 2 and over anode cage 8, and into a desired position. In this embodiment support body 10 is suspended from a set of slings 9 which are connected vertically downward from a spreader beam 20 to lifting eyes 15 of support body 10, and, relative to monopile 2, is in a lower position than anode cage 8. A hydraulic mechanism 150 is configured to adjust the position of support body 10 relative to monopile 2. Hydraulically retractable/extendable rollers 151 provide for guiding of support structure 10 over monopile 2 and over anode cage 8, if applicable. U-profiles 152 mounted on support structure 10 likewise help bring about the guiding of the support structure over anodes 80 of anode cage 8.

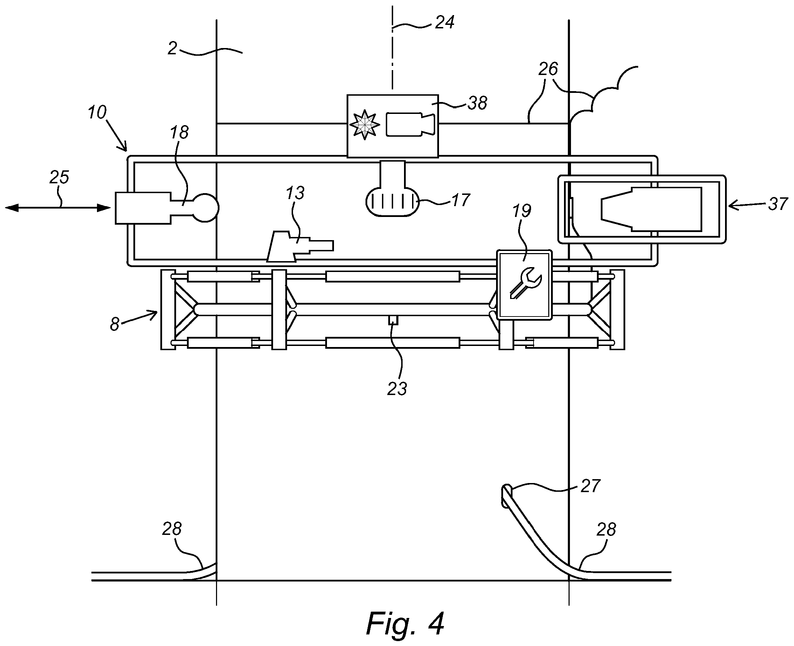

Figure 4 shows an embodiment of a support body 10 (or 10b) which is provided with a number of tools (13-18) and is arranged around a monopile 2. Monopile 2 is provided in known manner with accesses 27 for electrical cables 28. Support body 10 is constructed as a tubular frame on which a number of tools (13, 17-19, 37, 38) is arranged. An anode cage 8 is connected to support body 10 by means of an engaging tool 13 which is configured to engage anode cage 8 and then release it in the desired position. The desired position of anode cage 8 is for instance reached when anode cage 8 is lowered until it rests on support hooks 23 arranged on monopile 2.

In addition to engaging tool 13, support body 10 is further provided with a tool configured to position anode cage 8 relative to monopile 2. This positioning tool (17, 18) can comprise a rotation wheel 17 which is mounted on the frame of support body 10 and presses against the jacket surface of monopile 2 on a wheel side. Setting the rotation wheel 17 (or wheels 17) into rotation remotely enables support body 10 with the anode cage 8 coupled thereto to be rotated relative to monopile 2 around a longitudinal axis 24 of the monopile. In addition, the positioning tool (17, 18) can comprise a combined clamping/spacer tool 18. This can for instance take the form of a hydraulic cylinder which can be moved in a direction 25 running transversely of the longitudinal axis 24, in the direction of the jacket surface of monopile 2 or away therefrom. Support body 10 with anode cage 8 coupled thereto can hereby be displaced relative to monopile 2 in direction 25, be clamped in this direction and/or be guided during lowering of anode cage 8 along monopile 2.

In the shown embodiment support body 10 is further provided with a tool which is configured to connect anode cage 8 to the monopile. This connecting tool 19 is for instance configured to form a welded connection, a bolt connection, a screw connection, a grouted connection, a clamping connection, a seam-folded connection, a pin-hole connection or a friction welded connection, or a combination of said connections. Fig. 4 shows a connecting tool 19 for forming a bolt connection and can be mounted on the frame of support body 10 at different positions, for instance at five positions distributed along the periphery.

A tool useful in the context of an anode cage 8 comprises an earthing tool 37 with which an earthing cable 26, which is electrically connected to anode cage 8, can be attached to the jacket surface of monopile 2, for instance by means of a welded connection. A tool 37 suitable for electrically connecting anode cage 8 to monopile 2 is further elucidated hereinbelow.

In addition, it can be useful to provide support body 10 with monitoring equipment 38, for instance in the form of a camera, a gyrocompass, a depth sensor, a GPS or an electrical sensor, or a combination of said equipment.

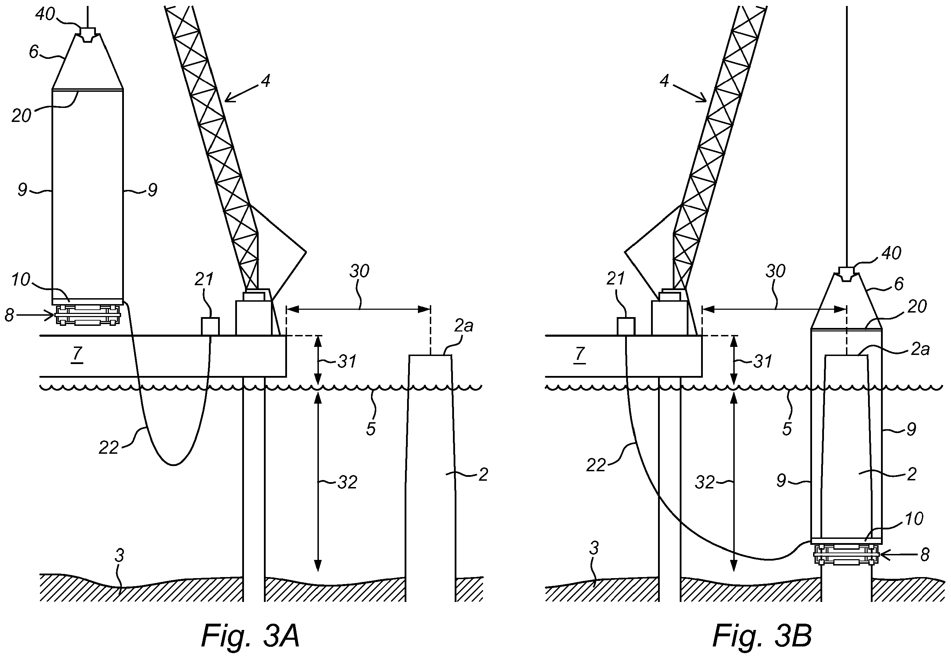

Shown with reference to fig. 3A and 3B are a number of steps according to an embodiment of the invented method. A method for arranging and attaching in a desired position of an anode cage 8 on an already present offshore monopile 2 comprises of providing an auxiliary device 1 according to the invention; engaging with the remotely controlled tool 13 an anode cage 8 to be attached to monopile 2; suspending support body 10 of auxiliary device 1 from a crane 4 present on the shown jack-up platform 7 by attaching hoisting cables 6 arranged on a hoisting hook 40 of crane 4 to lifting eyes 15 of support body 10; then carrying the support body 10 (see fig. 3B) with the anode cage 8 connected thereto into the desired position; and attaching anode cage 8 to monopile 2 in the desired position, after which this anode cage 8 is released by tool 13. After anode cage 8 has been (electrically and/or mechanically) connected to monopile 2 auxiliary device 1 is removed from monopile 2 and moved out of the vicinity of monopile 2 with crane 4.

The tools (13, 17-19, 37, 38) attached to support body 10, including engaging tool 13, are remotely controlled from a control room 21. This can comprise a computer and further all the equipment necessary for controlling the tools (13, 17-19, 37, 38), such as pumps, hydraulic conduits, valves and so on. Signal exchange between control room 21, in this case the computer (not shown), the tools (13, 17-19, 37, 38) and/or monitoring equipment 38 can take place via a data cable or umbilical 22, but can also take place by means of a wireless connection.

Although these are not limitative, figures 3A and 3B show typical distances over which auxiliary device 1 must be displaced during the operations. A horizontal distance 30 between jack-up platform 7 and monopile 2, a height 31 of the platform work deck above sea level 5 and a depth 32 of the desired position for anode cage 8 can thus be chosen subject to the situation on site.

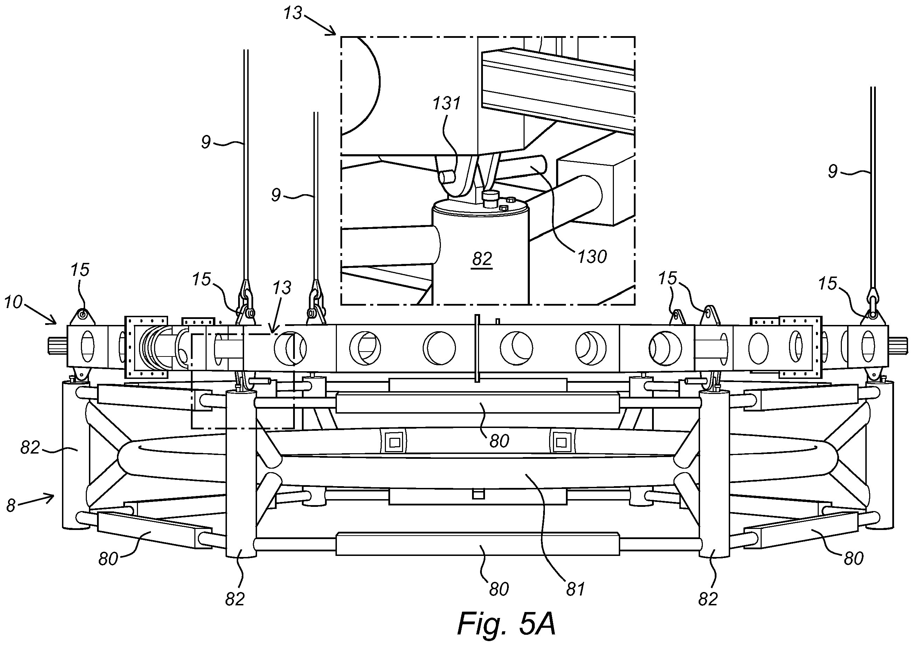

Figure 5A shows an embodiment of a support body 10 with an anode cage 8 coupled thereto. Support body 10 comprises an annular beam structure which is suspended from a number of slings 9, only three of which are shown, using lifting eyes 15. An anode cage 8 is connected to support body 10 by means of a remotely controlled connection shown in detail in the inset of fig. 5A, for instance a pin-hole connection (13, 130, 131). Anode cage 8 comprises a cage construction which is constructed in the shown embodiment from a number of vertical ribs 82 between which are placed anodes 80 which are received in the peripheral direction of the cage. A central ring 81 connected to the vertical ribs 82 is configured to bring about the suspension of anode cage 8 on monopile 2. For this purpose ring 81 comprises carrier consoles which rest on support points of monopile 2. Anode cage 8 is arranged around monopile 2.

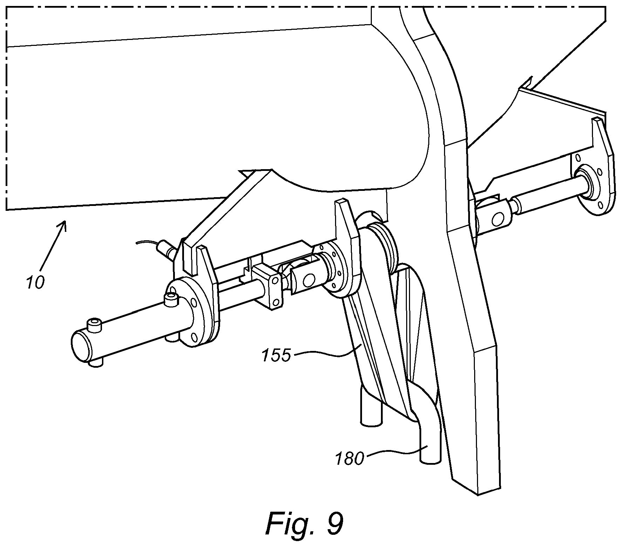

Another way of having anode cage 8 engage on support structure 10 is shown in Figure 9. A bracket 180 forming part of an anode cage 8 (not further shown) is held and received in a lifting strap 155 attached to support structure 10. Lifting strap 155 is releasably connected to support structure 10.

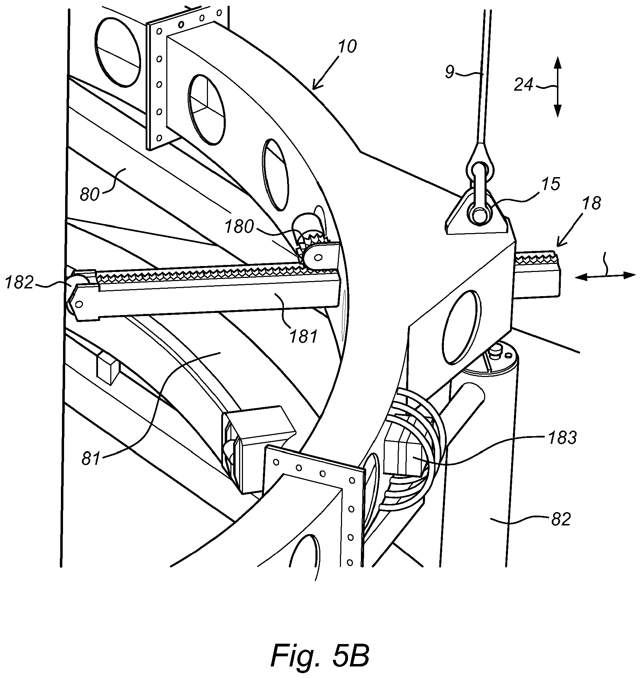

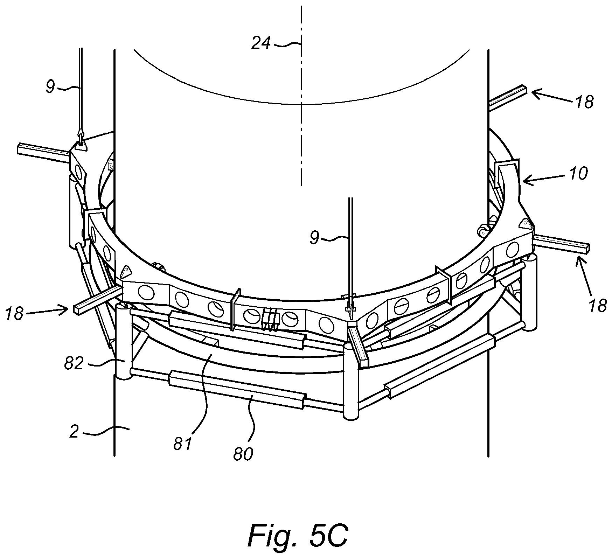

Fig. 5B and 5C show a detail view of a combined clamping/spacer tool 18. In the shown embodiment this tool 18 comprises a pressure-loaded bar 181 which is displaceable in the transverse direction 25 via a toothed wheel 180 and which is provided on an outer end with a running wheel 182 with which pressure-loaded bar 181 can be pressed or held against the jacket surface of monopile 2. Running wheel 182 rotates parallel to the longitudinal axis 24 of monopile 2 during lowering of support body 10 along monopile 2. Hydraulic valves 183 received in a hydraulic circuit control optionally hydraulically controlled tools (13, 17-19, 37, 38).

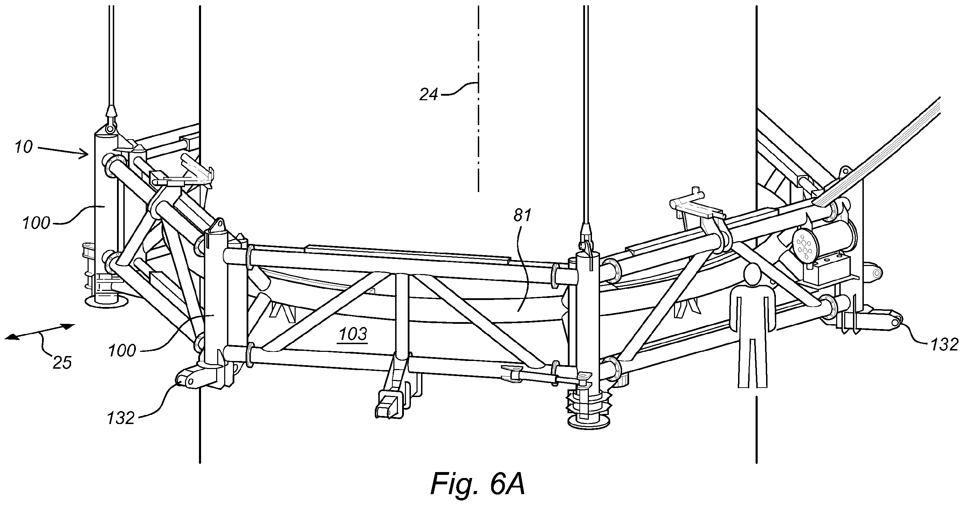

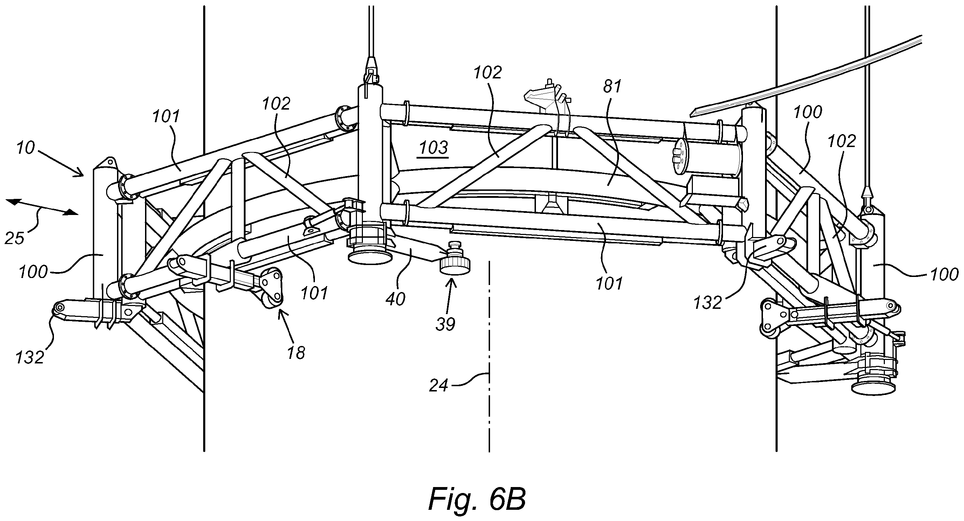

Fig. 6A and 6B show another embodiment in which support body 10 forms an annular lattice constructed from vertical ribs 100 which are mutually connected in a peripheral direction with transverse ribs 101 and intermediate strengthening ribs 102. Support body 10 surrounds an intermediate space 103 with the jacket surface of monopile 2 in which an anode cage 8 having the form shown in fig. 5A is received. The connection between anode cage 8 and support body 10 is in this embodiment made by sliding sliders 132 in transverse direction 25 until they support anode cage 8 and in this way carry anode cage 8. Sliders 132 are for this purpose mounted on guide plates (not shown) mounted an upper side of the monopile. These guide plates ensure that the orientation relative to the auxiliary device remains the same. In other words, the guide plates prevent anode cage 8 from sliding down from sliders 132. Support body 10 is further provided with a combined clamping/spacer tool 18 and with a rotating wheel 39 with which support body 10 can be rotated round the longitudinal axis 24 of monopile 2. Rotating wheel 39 is rigidly connected to support body 10 by means of bar 40 and can be set remotely into rotation round an axis running parallel to the longitudinal axis 24 of monopile 2. The angular position of the anode cage can hereby be precisely determined.

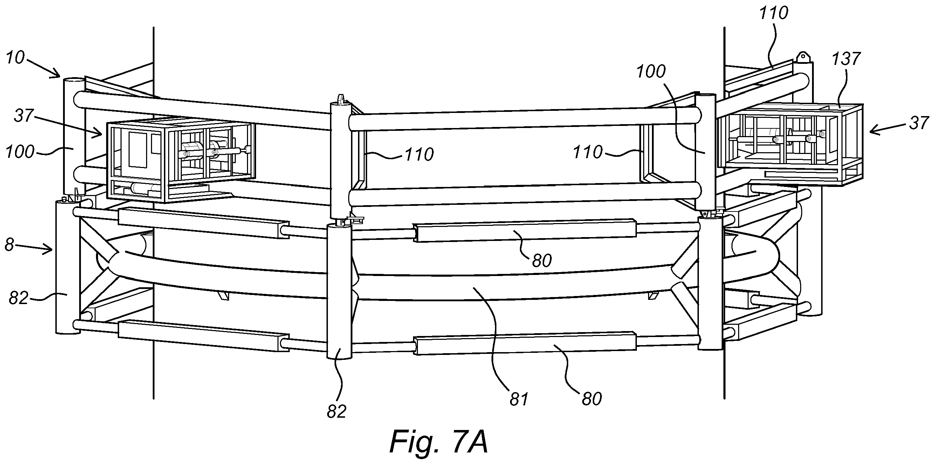

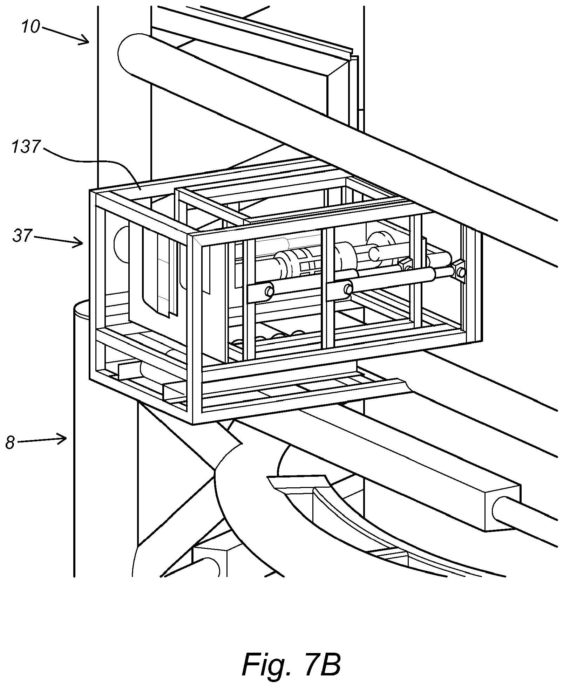

Fig. 7A and 7B show a support body 10 in which a per se known earthing tool 37 is received in a securing device 137, this bringing the earthing tool 37 into the desired position relative to monopile 2. When applied under water, earthing tool 37 takes a watertight form. Support body 10 is held at a distance from monopile 2 by means of spacers 110 running in transverse direction 25 and rigidly connected to the vertical ribs 100 of support body 10.

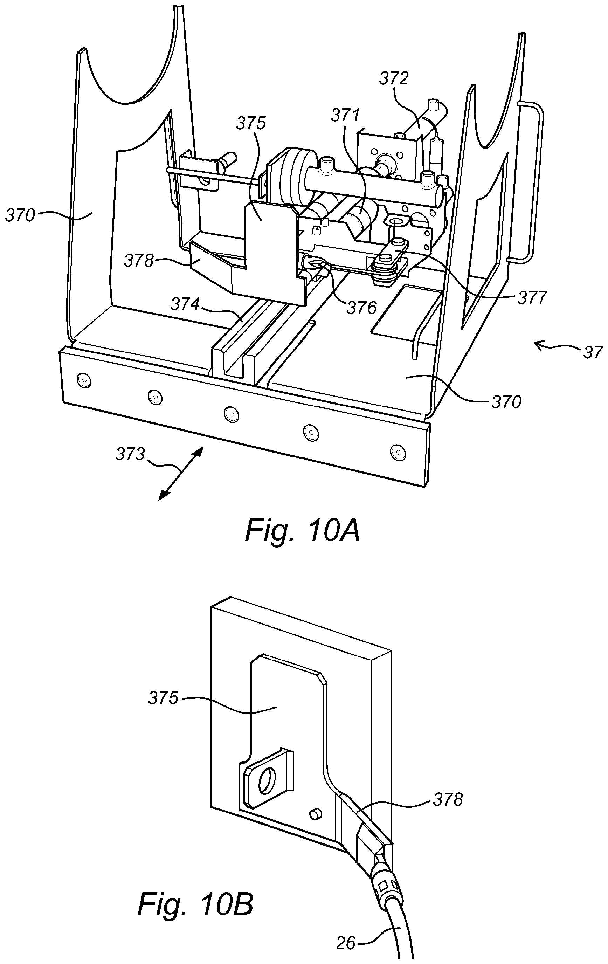

Finally, Fig. 10A and 10B show a possible embodiment of a tool 37 for bringing about an electrical connection between anode cage 8 and monopile 2. This tool 37 comprises a powder activated tool (PAT) 371, as for instance described in WO 2010/139866, received in a support frame 370. Powder activated tool 371 can be displaced in direction 373 of monopile 2 (not shown) with a hydraulic cylinder 372 received in support frame 370, wherein rail 374 serves as guide. Powder activated tool 371 is configured to mount an earthing plate 375 on an outer surface of monopile 2. Earthing plate 375 is held with a pin 376, wherein pin 376 can be released from earthing plate 375 with a mechanism 377. As also indicated in fig. 10B, earthing plate 375 is further provided with a side part 378 to which an earthing cable 26 is fixedly welded in order to obtain the electrical connection.

## Claims

1. Auxiliary device (1) for arranging and attaching a secondary construction (8) comprising an anode cage in a desired position on an already present offshore primary construction (2) comprising a foundation pile or transition piece of an offshore wind turbine, the auxiliary device comprising a peripheral support body (10) equipped with coupling means (15) from which it can be suspended from a hoisting means (4), carried into the vicinity of the primary construction (2), and positioned around the primary construction (2), wherein the support body further comprises remotely controlled tools (13, 17-19, 37), which remotely controlled tools (13, 17-19, 37) comprise:
- a tool ((13) configured to engage the secondary construction (8) and provide it into the desired position, and then release it in the desired position;
- further tools (37, 19) configured for realizing an electrical and mechanical connection between the secondary and the primary construction;
- positioning tools (17, 18) configured to position the secondary construction (8) relative to the primary construction (2), and to guide the secondary construction (8) along the primary construction (2);
wherein the coupling means (15) of the auxiliary device allow, after the electrical and mechanical connection between the secondary and the primary construction has been realized by said further tools, moving the auxiliary device out of the vicinity of the primary construction by hoisting it using the hoisting means (4), leaving the first and second construction mutually connected.

2. Auxiliary device according to claim 1, wherein the positioning tools (17, 18) comprise a propelling means, a number of wheels which make contact with a surface of the primary construction, or a turntable, or a combination of these positioning tools.

3. Auxiliary device according to claim 1 or 2, wherein a connecting tool (19) of the further tools (37, 19) is configured to form a welded connection, a bolt connection, a screw connection, a grouted connection, a clamping connection, a seam-folded connection, a pin-hole connection or a friction welded connection, or a combination of said connections.

4. Auxiliary device according to any one of the foregoing claims, wherein it further comprises monitoring equipment (38).

5. Auxiliary device according to claim 4, wherein the monitoring equipment (38) comprises a camera, a gyrocompass, a depth sensor, a GPS or an electrical sensor, or a combination of said equipment.

6. Auxiliary device according to any one of the foregoing claims, wherein the tools and/or the monitoring equipment are accommodated in a substantially watertight housing.

7. Auxiliary device according to any one of the foregoing claims, wherein means for the remote control are electrical, hydraulic, optical and/or acoustic.

8. Auxiliary device according to any one of the foregoing claims, wherein it further comprises a computer for controlling the tools and/or the monitoring equipment, wherein signal exchange between computer, tools and/or monitoring equipment takes place via a data cable and/or a wireless connection.

9. Method for arranging and attaching a secondary construction (8) comprising an anode cage in a desired position on an already present offshore primary construction (2) comprising a foundation pile or transition piece of an offshore wind turbine, the method comprising of:
- providing an auxiliary device (1) according to any one of the foregoing claims;
- engaging the secondary construction (8) with the remotely controlled tools (13);
- suspending the peripheral support body (10) from a hoisting means (4) using the coupling means (15);
- bringing the support body (10) with the secondary construction (8) connected thereto into the desired position;
- releasing the secondary construction (8) in the desired position;
- realizing an electrical and mechanical connection between the secondary and the primary construction; and
- moving the auxiliary device (1) out of the vicinity of the first construction (2) after the electrical and mechanical connection has been realized by the hoisting means (4).

## Patentansprüche

1. Hilfsvorrichtung (1) zum Anordnen und Befestigen einer Sekundärkonstruktion (8), aufweisend einen Anodenkäfig, in einer gewünschten Position auf einer bereits vorhandenen Offshore-Primärkonstruktion (2), aufweisend einen Gründungspfahl oder ein Übergangsstück einer Offshore-Windturbine, wobei die Hilfsvorrichtung einen peripheren Tragkörper (10) aufweist, der mit Kupplungsmitteln (15) ausgestattet ist, an denen er an einem Hebemittel (4) aufgehängt, in die Nähe der Primärkonstruktion (2) gebracht und um die Primärkonstruktion (2) herum positioniert werden kann, wobei der Tragkörper ferner ferngesteuerte Werkzeuge (13, 17-19, 37) aufweist, wobei die ferngesteuerten Werkzeuge (13, 17-19, 37) Folgendes aufweisen:
- ein Werkzeug (13), das dazu ausgelegt ist, mit der Sekundärkonstruktion (8) in Eingriff zu kommen und sie in die gewünschte Position zu bringen und sie dann in der gewünschten Position freizugeben;
- weitere Werkzeuge (37, 19), die für die Herstellung einer elektrischen und mechanischen Verbindung zwischen der Sekundär- und der Primärkonstruktion ausgebildet sind;
- Positionierungswerkzeuge (17, 18), die dazu ausgelegt sind, die Sekundärkonstruktion (8) relativ zu der Primärkonstruktion (2) zu positionieren und die Sekundärkonstruktion (8) entlang der Primärkonstruktion (2) zu führen;
wobei die Kupplungsmittel (15) der Hilfsvorrichtung es ermöglichen, nachdem die elektrische und mechanische Verbindung zwischen der sekundären und der primären Konstruktion durch die genannten weiteren Werkzeuge hergestellt wurde, die Hilfsvorrichtung aus der Nähe der primären Konstruktion heraus zu bewegen, indem sie mit Hilfe der Hebemittel (4) angehoben wird, wobei die erste und die zweite Konstruktion miteinander verbunden bleiben.

2. Hilfsvorrichtung nach Anspruch 1, wobei die Positionierwerkzeuge (17, 18) ein Antriebsmittel, eine Anzahl von Rädern, die mit einer Oberfläche der Primärkonstruktion in Kontakt stehen, oder einen Drehtisch oder eine Kombination dieser Positionierwerkzeuge aufweisen.

3. Hilfsvorrichtung nach Anspruch 1 oder 2, wobei ein Verbindungswerkzeug (19) der weiteren Werkzeuge (37, 19) dazu ausgelegt ist, eine Schweißverbindung, eine Bolzenverbindung, eine Schraubverbindung, eine Vergussverbindung, eine Klemmverbindung, eine Nahtfalzverbindung, eine Stiftlochverbindung oder eine Reibschweißverbindung oder eine Kombination dieser Verbindungen zu bilden.

4. Hilfsvorrichtung nach einem der vorangehenden Ansprüche, wobei sie weiter Überwachungseinrichtungen (38) aufweist.

5. Hilfsgerät nach Anspruch 4, wobei die Überwachungseinrichtungen (38) eine Kamera, einen Kreiselkompass, einen Tiefensensor, ein GPS oder einen elektrischen Sensor oder eine Kombination der genannten Einrichtungen aufweisen.

6. Hilfsvorrichtung nach einem der vorhergehenden Ansprüche, wobei die Werkzeuge und/oder die Überwachungseinrichtungen in einem im Wesentlichen wasserdichten Gehäuse untergebracht sind.

7. Hilfsgerät nach einem der vorhergehenden Ansprüche, wobei die Mittel zur Fernsteuerung elektrisch, hydraulisch, optisch und/oder akustisch sind.

8. Hilfsgerät nach einem der vorhergehenden Ansprüche, wobei es weiter einen Computer zur Steuerung der Werkzeuge und/oder der Überwachungseinrichtungen aufweist, wobei der Signalaustausch zwischen Computer, Werkzeugen und/oder Überwachungseinrichtungen über ein Datenkabel und/oder eine drahtlose Verbindung erfolgt.

9. Verfahren zum Anordnen und Befestigen einer Sekundärkonstruktion (8), die einen Anodenkäfig aufweist, in einer gewünschten Position an einer bereits vorhandenen Offshore-Primärkonstruktion (2), die einen Gründungspfahl oder ein Übergangsstück einer Offshore-Windturbine aufweist, das Verfahren aufweisend:
- Bereitstellen einer Hilfsvorrichtung (1) nach einem der vorangehenden Ansprüche;
- Verbinden der Sekundärkonstruktion (8) mit den ferngesteuerten Werkzeugen (13);
- Aufhängen des peripheren Stützkörpers (10) an einem Hebemittel (4) mit Hilfe des Kupplungsmittels (15);
- Verbringen des Stützkörpers (10) mit der damit verbundenen Sekundärkonstruktion (8) in die gewünschte Position;
- Lösen der Sekundärkonstruktion (8) in der gewünschten Position;
- Herstellen einer elektrischen und mechanischen Verbindung zwischen der sekundären und der primären Konstruktion; und
- Bewegen der Hilfsvorrichtung (1) heraus aus der Nähe der ersten Konstruktion (2), nachdem die elektrische und mechanische Verbindung durch das Hebemittel (4) hergestellt worden ist.

## Revendications

1. Dispositif auxiliaire (1) pour l'agencement et la fixation d'une construction secondaire (8) comprenant une cage anodique dans une position souhaitée sur une construction primaire (2) en mer déjà présente comprenant un pilier de fondation ou un raccord de transition d'une éolienne en mer, le dispositif auxiliaire comprenant un corps de support périphérique (10) équipé de moyens de couplage (15) à partir desquels il peut être suspendu par un moyen de levage (4), porté jusqu'au voisinage de la construction primaire (2), et positionné autour de la construction primaire (2), dans lequel le corps de support comprend en outre des outils commandés à distance (13, 17 à 19, 37), lesquels outils commandés à distance (13, 17 à 19, 37) comprennent :
- un outil (13) configuré pour venir en prise avec la construction secondaire (8) et la fournir dans la position souhaitée, et ensuite la libérer dans la position souhaitée ;
- des outils supplémentaires (37, 19) configurés pour réaliser une liaison électrique et mécanique entre la construction secondaire et la construction primaire ;
- des outils de positionnement (17, 18) configurés pour positionner la construction secondaire (8) par rapport à la construction primaire (2), et pour guider la construction secondaire (8) le long de la construction primaire (2) ;
dans lequel les moyens de couplage (15) du dispositif auxiliaire permettent, après que la liaison électrique et mécanique entre la construction secondaire et la construction primaire a été réalisée par lesdits outils supplémentaires, de déplacer le dispositif auxiliaire hors du voisinage de la construction primaire par son levage à l'aide du moyen de levage (4), en laissant la première et la deuxième construction mutuellement reliées.

2. Dispositif auxiliaire selon la revendication 1, dans lequel les outils de positionnement (17, 18) comprennent un moyen de propulsion, un certain nombre de roues qui sont en contact avec une surface de la construction primaire, ou une plaque tournante, ou une combinaison de ces outils de positionnement.

3. Dispositif auxiliaire selon la revendication 1 ou 2, dans lequel un outil de liaison (19) des outils supplémentaires (37, 19) est configuré pour former une liaison soudée, une liaison par boulon, une liaison par vis, une liaison jointoyée, une liaison par serrage, une liaison par suture pliée, une liaison par cheville-trou ou une liaison soudée par friction, ou une combinaison de ces liaisons.

4. Dispositif auxiliaire selon l'une quelconque des revendications précédentes, dans lequel il comprend en outre un équipement de surveillance (38).

5. Dispositif auxiliaire selon la revendication 4, dans lequel l'équipement de surveillance (38) comprend un appareil de prise de vues, un gyrocompas, un capteur de profondeur, un GPS ou un capteur électrique, ou une combinaison desdits équipements.

6. Dispositif auxiliaire selon l'une quelconque des revendications précédentes, dans lequel les outils et/ou l'équipement de surveillance sont logés dans un boîtier sensiblement étanche à l'eau.

7. Dispositif auxiliaire selon l'une quelconque des revendications précédentes, dans lequel les moyens pour la commande à distance sont électriques, hydrauliques, optiques et/ou acoustiques.

8. Dispositif auxiliaire selon l'une quelconque des revendications précédentes, dans lequel il comprend en outre un ordinateur pour la commande des outils et/ou de l'équipement de surveillance, dans lequel un échange de signaux entre l'ordinateur, les outils et/ou l'équipement de surveillance a lieu via un câble de données et/ou une connexion sans fil.

9. Procédé pour l'agencement et la fixation d'une construction secondaire (8) comprenant une cage anodique dans une position souhaitée sur une construction primaire (2) en mer déjà présente comprenant un pilier de fondation ou un raccord de transition d'une éolienne en mer, le procédé comprenant :
- la fourniture d'un dispositif auxiliaire (1) selon l'une quelconque des revendications précédentes ;
- la mise en prise de la construction secondaire (8) avec les outils commandés à distance (13) ;
- la suspension du corps de support périphérique (10) par un moyen de levage (4) à l'aide des moyens de couplage (15) ;
- le fait d'amener le corps de support (10) avec la construction secondaire (8) reliée à celui-ci dans la position souhaitée ;
- la libération de la construction secondaire (8) dans la position souhaitée ;
- la réalisation d'une liaison électrique et mécanique entre la construction secondaire et la construction primaire ; et
- le déplacement du dispositif auxiliaire (1) hors du voisinage de la première construction (2) après que la liaison électrique et mécanique a été réalisée par le moyen de levage (4).
